# EUROPEAN PATENT SPECIFICATION

(11) **EP 3 907 783 B1**
(45) Date of publication and mention of the grant of the patent: **07.10.2026**
(21) Application number: 19848926.2
(22) Date of filing: 27.02.2019
(51) Int. Cl.: H01M 50/533, H01M 50/538, H01M 10/04, H01M 50/553, H01M 50/209, H01M 50/15, H01M 50/536

(54) **SECONDARY BATTERY AND BATTERY MODULE**
SEKUNDÄRBATTERIE UND BATTERIEMODUL
BATTERIE SECONDAIRE ET MODULE DE BATTERIE

(30) Priority: 29.12.2018 CN 201811646743
(43) Date of publication of application: 10.11.2021
(73) Proprietor: Contemporary Amperex Technology (Hong Kong) Limited, Central, Central And Western District (HK)
(72) Inventor: CHEN, Ning, Ningde City, Fujian 352100 (CN); JIN, Haizu, Ningde City, Fujian 352100 (CN); SHI, Dongyang, Ningde City, Fujian 352100 (CN); LI, Zhenhua, Ningde City, Fujian 352100 (CN); HU, Fei, Ningde City, Fujian 352100 (CN); CHEN, Yuanbao, Ningde City, Fujian 352100 (CN)
(74) Representative: Slingsby Partners LLP
(86) International application number: PCT/CN2019/076266
(87) International publication number: WO 2020/133673

(56) References cited:
- CN-A- 108 198 989
- CN-A- 108 198 989
- CN-U- 206 650 130
- US-A1- 2014 349 149

## Description

### TECHNICAL FIELD

The present disclosure relates to a technical field of batteries, and particularly relates to a secondary battery and a battery module.

### BACKGROUND

With the development of science and technology, secondary batteries have been widely used in portable electronic devices such as mobile phones, digital video cameras, and laptop computers. The secondary batteries also have a broad application prospect in large and medium-sized electric equipment, such as electric vehicles, for example, electric automobiles and electric bicycles, and energy storage facilities, and have become an important technical means to solve global problems such as energy crisis and environmental pollution. In the prior art, tabs of the secondary batteries need to be bent to a direction intersecting with an extension direction of the tabs and then connected to current collecting members. Since the tabs are subjected to tensile stress after the bending, they are prone to break, which seriously affects a production yield of the secondary batteries.
US2014/349149A1 discloses a rechargeable battery, which includes a case having an inner space, a first electrode assembly inside the case, a second electrode assembly inside the case, a current collecting member including a first current collecting piece electrically connected to an electrode of the first electrode assembly and a second current collecting piece electrically connected to an electrode of the second electrode assembly, the electrode of the second electrode assembly having a same polarity as the electrode of the first electrode assembly, and a first terminal electrically connected to the first current collecting member and protruding outside the case, where the first current collecting piece and the second current collecting piece have different lengths.

### SUMMARY

Embodiments of the present disclosure provide a secondary battery and a battery module. Tabs included in the secondary battery may be connected to a first current collecting piece without bending, thereby avoiding the tabs from being broken due to excessive tensile stress caused by the bending.

On one aspect, the embodiments of the present disclosure provide a secondary battery, including:
a case, including a receiving space with an opening; a cap assembly, connected to the case in a sealed manner to close the opening; an electrode assembly disposed in the receiving space, wherein the electrode assembly comprises two end faces opposite to each other in a first direction perpendicular to an axial direction of the receiving space, and tabs extending from the end faces, wherein the electrode assembly includes two or more electrode units stacked in the axial direction; and a current collecting unit, including a first piece and a first current collecting piece connected to the first piece, wherein the first piece extends in the axial direction, the tab extends in the first direction and is connected to the first current collecting piece, and a portion of the tab connected to the first current collecting piece and the first current collecting piece are stacked in the axial direction.

The secondary battery according to the embodiments of the present disclosure includes the case, the electrode assembly disposed in the case, the cap assembly that seals the case, and the current collecting unit for connecting the cap assembly and the electrode assembly. The current collecting unit includes the first piece and the first current collecting piece connected to the first piece. The tab of the electrode assembly is connected to the first current collecting piece. The tab of the electrode assembly extends from the end face of the electrode assembly substantially in a straight line in the first direction, and is connected to the first current collecting piece. A portion of the tab connected to the first current collecting piece and the first current collecting piece are stacked in the axial direction. Since the tab may be connected to the first current collecting piece without bending operation after extending from the end face, the entire tab will not be broken due to excessive tensile stress caused by the bending, which effectively improves a production yield of the secondary battery.

On a further aspect, the embodiments of the present disclosure provide a battery module, which includes two or more secondary batteries according to the above embodiments, wherein the two or more secondary batteries are arranged side by side.

### BRIEF DESCRIPTION OF THE DRAWINGS

Features, advantages, and technical effects of exemplary embodiments of the present disclosure will be described below with reference to the accompanying drawings.
Fig. 1 is a schematic diagram showing a configuration of a battery module according to an embodiment of the present disclosure;
Fig. 2 is a schematic diagram showing a configuration of a secondary battery according to an embodiment of the present disclosure;
Fig. 3 is a schematic exploded view showing a configuration of a secondary battery according to an embodiment of the present disclosure;
Fig. 4 is a schematic diagram showing a configuration of an electrode unit according to an embodiment of the present disclosure;
Fig. 5 is a schematic cross-sectional view showing a configuration of an electrode unit according to an embodiment of the present disclosure;
Fig. 6 is a schematic exploded view showing a configuration of a secondary battery according to another embodiment of the present disclosure;
Fig. 7 is a schematic diagram showing a configuration of a current collecting unit in the embodiment of Fig. 6;
Fig. 8 is a schematic exploded view showing a configuration of a secondary battery according to another embodiment of the present disclosure;
Fig. 9 is a schematic exploded view showing a configuration of a secondary battery according to another embodiment of the present disclosure;
Fig. 10 is a schematic diagram showing a configuration of a current collecting unit in the embodiment of Fig. 9.

In the drawings, the drawings are not drawn to actual scale.

### Reference numerals:

10, secondary battery; 11, case; 11a, receiving space; 12, cap assembly; 121, cap plate; 122, electrode terminal; 13, electrode assembly; 13a, end face; 13b, tab; 131, electrode unit; 131a, wide surface; 131b, narrow surface; 131c, sub-end face; 131d, sub-tab; 14, current collecting unit; 141, first piece; 141a, main body portion; 141b, extension portion; 142, first current collecting piece; 142a, first connection end; 143, second current collecting piece; 143a, second connection end; 144, first connection piece; 145, second connection piece; 146, second piece; 146a, boss; X, axial direction; Y, first direction; Z, second direction; 20, battery module.

### DETAILED DESCRIPTION

Below, embodiments of the present disclosure will be further described in detail with reference to the accompanying drawings and embodiments. The detailed description of the embodiments and the accompanying drawings are intended to exemplarily illustrate the principles of the present disclosure and are not intended to limit the scope of the present disclosure. That is, the present disclosure is not limited to the described embodiments.

In the description of the present disclosure, it should be noted that, unless otherwise stated, the meaning of "a plurality" is two or more; the orientations or positional relationships indicated by the terms "upper", "lower", "left", "right", "inner", "outer" and the like are merely for the purpose of describing the present disclosure and simplifying the description, and are not intended to indicate or imply that the device or component referred to has a particular orientation, is constructed and operated in a particular orientation, and therefore cannot be understood as a limitation of the present disclosure. Moreover, the terms "first", "second", "third" and the like are used for descriptive purposes only and are not to be construed as indicating or implying relative importance.

In the description of the present disclosure, it should be noted that, unless otherwise specified and stated clearly, the terms "install", "connect", and "couple" are to be understood broadly, and may be, for example, a fixed connection, a disassemble connection, or an integral connection, and may be a direct connection or an indirect connection via an intermediate medium. The specific meaning of the above terms in the present disclosure can be understood by the person skilled in the art according to actual circumstance.

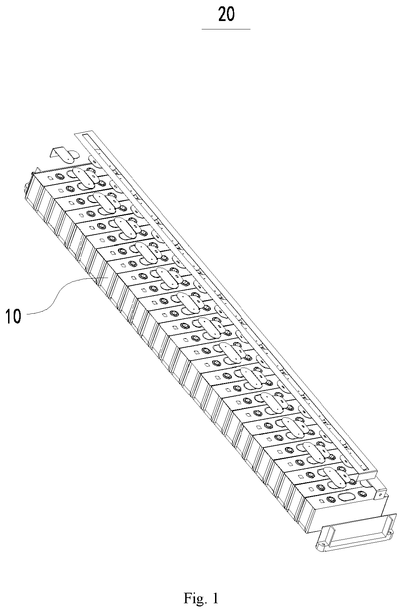

In order to better understand the present disclosure, the battery module 20 and the secondary battery 10 according to the embodiments of the present disclosure are described in detail below with reference to Figs. 1-9.

Referring to Fig. 1, an embodiment of the present disclosure provides a battery module 20, which includes: two or more secondary batteries 10 of the present embodiment and a busbar for connecting two secondary batteries 10. The two or more secondary batteries 10 are arranged side by side in a same direction. One end of the busbar is fixedly connected to one of two secondary batteries 10, and the other end is fixedly connected to the other one of the two secondary batteries 10. The two or more secondary batteries 10 of the present embodiment can be arranged side by side in a thickness direction of the secondary batteries 10 to constitute a battery module 20.

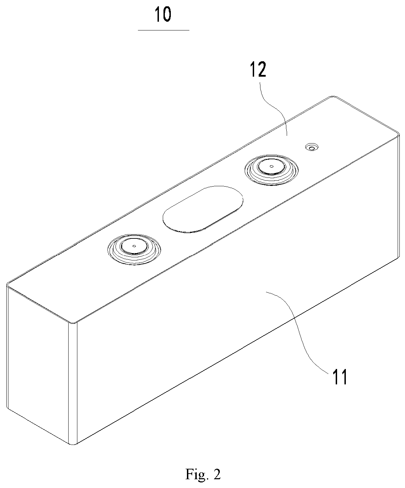

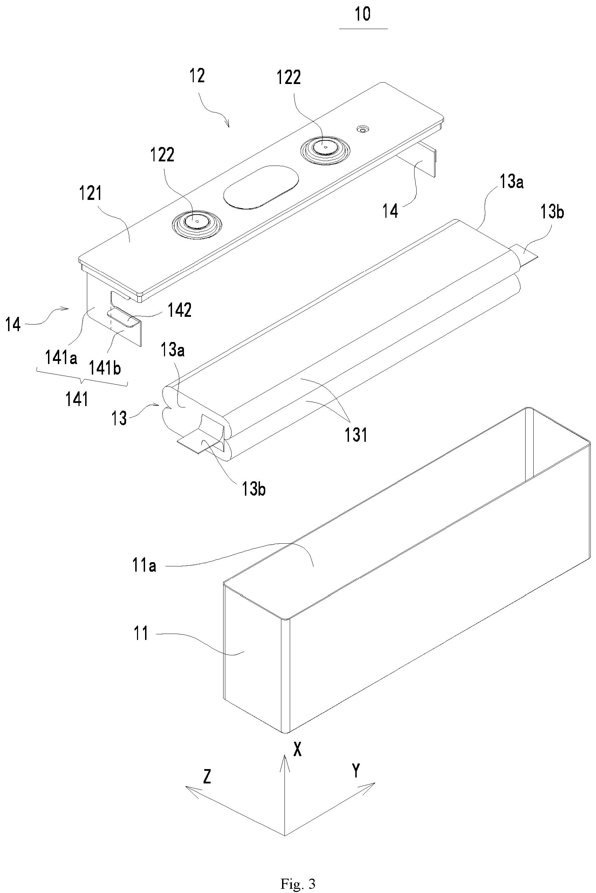

Referring to Figs. 2 and 3, the secondary battery 10 according to the embodiment of the present disclosure includes a case 11, an electrode assembly 13 disposed in the case 11, and a cap assembly 12 which is connected to the case 11 in a sealed manner.

The case 11 of the present embodiment may be formed in a quadrangular prism shape or in other shapes. The case 11 includes a receiving space 11a with an opening. The receiving space 11a is used to receive the electrode assembly 13 and electrolyte. The case 11 may be made of a material such as aluminum, aluminum alloy, or plastic.

The electrode assembly 13 according to the embodiment of the present disclosure includes two end faces 13a opposite to each other in a first direction Y perpendicular to an axial direction X of the receiving space 11a, and two tabs 13b, each extending from the respective end face 13a. The axial direction X of the receiving space 11a is parallel to an extending direction of the receiving space 11a. In the present embodiment, each end face 13a of the electrode assembly 13 is extended with one tab 13b, and each electrode assembly 13 has two tabs 13b opposite to each other in the first direction Y, wherein one of the two tabs 13b serves as a positive tab and the other serves as a negative tab.

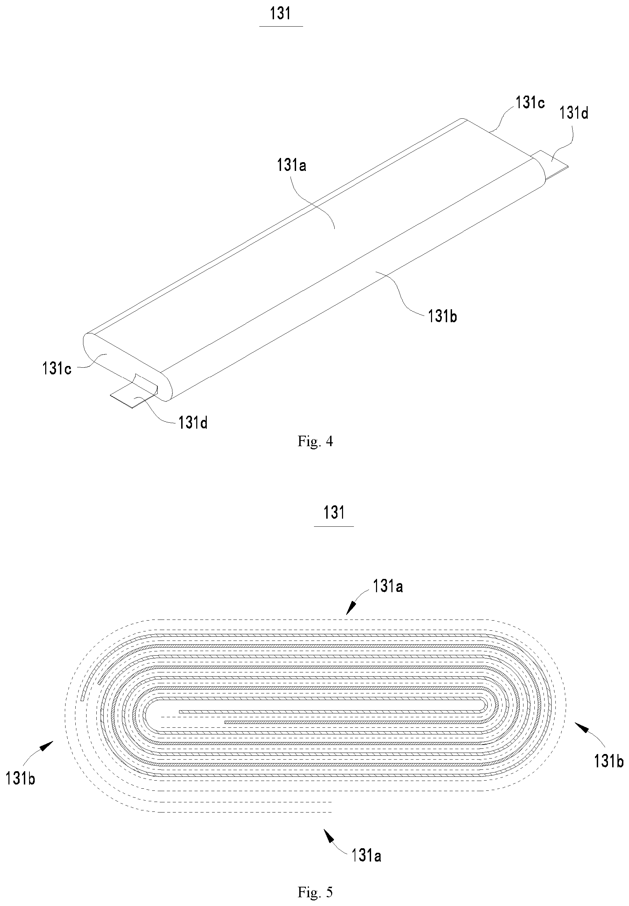

As shown in Fig. 3, the electrode assembly 13 of the present embodiment includes two or more electrode units 131 stacked in the axial direction X of the receiving space 11a. The electrode unit 131 of the present embodiment may include a main body, which is constituted by stacking or winding a first electrode plate, a second electrode plate and a separator together, and sub-tabs 131d connected to the main body. The separator is an insulator interposed between the first electrode plate and the second electrode plate. The electrode unit 131 of the present embodiment includes one layer of the separator, one layer of the first electrode plate, one layer of the separator, and one layer of the second electrode plate. In the present embodiment, the description is made by exemplarily taking the first electrode plate as a positive electrode plate, and taking the second electrode plate as a negative electrode plate. Similarly, in other embodiments, the first electrode plate may serve as the negative electrode plate, and the second electrode plate serves as the positive electrode plate. Further, a positive active material is coated on a coating region of the positive electrode plate, and a negative active material is coated on a coating region of the negative electrode plate. Uncoated regions extending from the main body act as the sub-tabs. As shown in Fig. 3, the electrode unit 131 includes two sub-end faces 131c opposite to each other in the first direction Y and two sub-tabs 131d. The two sub-tabs serve as a positive tab and a negative tab, respectively. The positive tab extends out from the coated region of the positive electrode plate; and the negative tab extends out from the coated region of the negative electrode plate. The first direction Y is perpendicular to the axial direction X. However, the perpendicularity here is not limited to the strict definition of "perpendicularity" in the mathematical sense. The end face 13a of each electrode assembly 13 includes the sub-end faces 131c of the respective electrode units 131, and the tab 13b of each electrode assembly 13 includes the sub-tabs 131d of the respective electrode units 131. In one embodiment, referring to Fig. 4, the electrode unit 131 is formed in a flat shape, and includes two wide surfaces 131a and two narrow surfaces 131b connecting the two wide surfaces 131a. The two wide surfaces 131a are opposite to each other in the axial direction X. The two wide surfaces 131a and the two narrow surfaces 131b are alternately arranged.

The cap assembly 12 of the present embodiment is connected to the case 11 in a sealed manner, to close the opening. In one embodiment, the cap assembly 12 includes a cap plate 121 and electrode terminals 122. The cap assembly 12 is connected to the case 11 in a sealed manner via the cap plate 121. The electrode terminals 122 are disposed on the cap plate 121 and are electrically connected to the electrode assembly 13 via current collecting units 14.

As shown in Fig. 2, the current collecting unit 14 according to the embodiment of the present disclosure is used to connect the electrode assembly 13 with the electrode terminal 122 of the cap assembly 12. The current collecting unit 14 includes a first piece 141 and a first current collecting piece 142 connected to the first piece 141. The first piece 141 extends in the axial direction X. The tab 13b extends in the first direction Y and is connected to the first current collecting piece 142. A portion of the tab 13b connected to the first current collecting piece 142 and the first current collecting piece 142 are stacked in the axial direction X. In one embodiment, a surface of the first current collecting piece 142 for connecting with the tab 13b and a surface of the tab 13b for connecting with the first current collecting piece 142 are substantially at the same horizontal plane, so that the surface of the tab 13b for connecting with the first current collecting piece 142 may be directly connected to the first current collecting piece 142, after the tab 13 extends directly from the end face 13a of the electrode assembly 13. As such, there is no need to perform a bending operation on the tab 13b and then connect a free end of the tab 13b to the first current collecting piece 142 after the bending operation, thereby avoiding the tab 13b from being subjected to excessive tensile stress due to the bending operation and thus avoiding breakages or cracks of the tab 13b, which may reduce a failure rate of the electrode assembly 13 due to the failure of the tab 13b, improve a production yield of the secondary battery 10, and effectively reduce a production cost.

The first current collecting piece 142 in the embodiment of the present disclosure includes a first connection end 142 connected with the first piece 141. The first connection end 142a extends in a second direction Z that is perpendicular to both the axial direction X and the first direction Y. A thickness direction of the first current collecting piece 142 is the same as the axial direction X. As such, two surfaces of the first current collecting piece 142 opposite to each other in the axial direction X have relatively large areas, so that the connection between the tab 13b with any one of the two surfaces is more stable and reliable.

The first current collecting plate 142 in the embodiment of the present disclosure is located on a side of the first piece 141 close to the case 11. The tab 13b is connected to a surface of the first current collecting piece 142 facing or facing away from the cap assembly 12. As such, the first current collecting piece 142 is disposed away from the electrode assembly 13, and a sufficiently large yielding space can be reserved on opposite sides of the first current collecting piece 142 in the axial direction X. When the first current collecting piece 142 and the tab 13b are connected by ultrasonic welding, it is convenient for an ultrasonic device to clamp the first current collecting piece 142 from both sides of the first current collecting piece 142 in the axial direction X, thereby facilitating an ultrasonic welding operation.

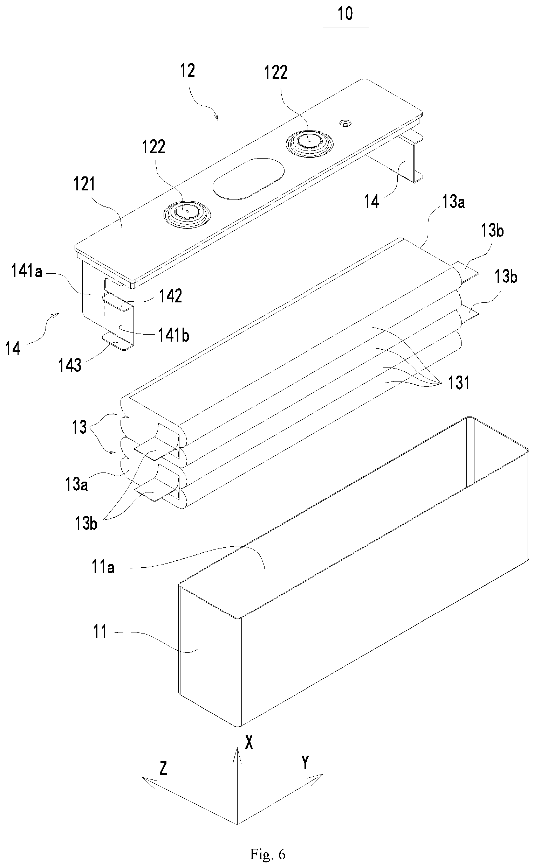

Referring to Fig. 5 and Fig. 6, the current collecting unit 14 according to the embodiment of the present disclosure further includes a second current collecting piece 143 connected to the first piece 141. The first current collecting piece 142 and the second current collecting piece 143 are both located on a side of the first piece 141 close to the case 11. The first current collecting piece 142 and the second current collecting piece 143 are located on the same side of the first piece 141. The first current collecting piece 142 and the second current collecting piece 143 are spaced apart with a predetermined distance in a second thickness direction to generate a yielding space between them. When the first current collecting piece 142 and the second current collecting piece 143 are respectively connected to the tabs 13b by the ultrasonic welding, it is convenient for the ultrasonic device to clamp the first current collecting piece or the second current collecting piece 143 from both sides of the first current collecting piece 142 or the second current collecting piece 143 in the second thickness direction, thereby facilitating the ultrasonic welding operation. There are two electrode assemblies 13. The two electrode assemblies 13 are stacked in the axial direction X. The tab 13b of one electrode assembly 13 is electrically connected to the first current collecting piece 142, and the tab 13b of the other electrode assembly 13 is electrically connected to the second current collecting piece 143. A portion of the tab 13b connected to the second current collecting piece 143 and the second current collecting piece 143 are stacked in the axial direction X. As such, there is no need to perform a bending operation on the tab 13b of the electrode assembly 13 and then connect a free end of the tab 13b to the second current collecting piece 143 after the bending operation, thereby avoiding the tab 13b from being subjected to excessive tensile due to the bending operation, and thus avoiding breakages or cracks of the tab 13b, which may reduce the failure rate of the electrode assembly 13 due to the failure of the tab 13b.

Referring to Fig. 6, the first piece 141 according to the embodiment of the present disclosure includes a main body portion 141a extending in the axial direction X and an extension portion 141b connected to the main body portion 141a. The extension portion 141b extends beyond the main body portion 141a in the second direction Z perpendicular to both the axial direction X and the first direction Y. The first current collecting piece 142 and the second current collecting piece 143 are respectively connected to both ends of the extension portion 141b in the axial direction X. Since the first current collecting piece 142 and the second current collecting piece 143 are respectively connected to the two opposite ends of the extension portion 141b, the tab 13b may be fixedly connected to the first current collecting piece 142 or the second current collecting piece 143 without extending very long. Therefore, an extension length of the tab 13b may be effectively shortened, which is conducive to reduce a space occupancy rate of the tab 13b, increase an energy density of the secondary battery 10, and also effectively reduce a processing cost.

In one embodiment, the first current collecting piece142 is disposed closer to the cap assembly 12 than the second current collecting piece 143. The tab 13b of one electrode assembly 13 is connected to a surface of the first current collecting piece 142 facing the cap assembly 12, and the tab 13b of the other electrode assembly 13 is connected to a surface of the second current collecting piece 143 facing away from the cap assembly 12, so that the first current collecting piece 142 and the second current collecting piece 143 are located between the two tabs 13b. On the one hand, it is convenient for the first current collecting piece 142 and the second current collecting piece 143 to be welded to the corresponding tabs 13b; on the other hand, a maximum size of the first current collecting piece 142, the second current collecting piece 143 and the two tabs 13b in the axial direction X may be reduced, which is conducive to reduce a space occupancy rate of the first current collecting piece 142, the second current collecting member 143 and the two tabs 13b in the axial direction X, and increase the energy density of the secondary battery 10. In one embodiment, the first current collecting piece 142 and the second current collecting piece 143 are at least partially overlapped in the axial direction X, which is conducive to reduce a space occupancy rate of the first current collecting piece 142 and the second current collecting piece 143 in the second direction Z. Preferably, the first current collecting piece 142 and the second current collecting piece 143 have the same configuration, and the first current collecting piece 142 and the second current collecting piece 143 are aligned in the axial direction X.

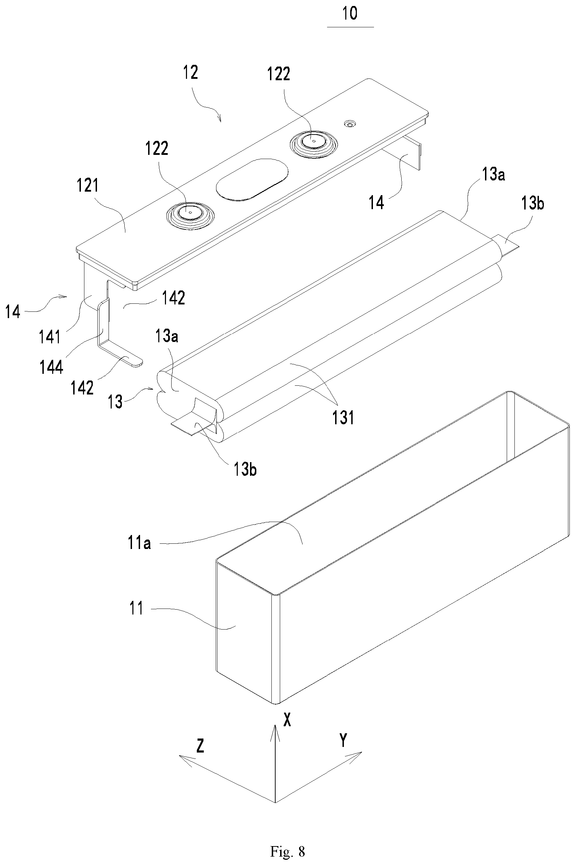

In one embodiment, referring to Fig. 8, the current collecting unit 14 further includes a first connection piece 144 connected to the first piece 141. The first connection piece 144 extends in the axial direction X and a thickness direction of the first connection piece 144 is parallel to the second direction Z. The first current collecting piece 142 is connected to the first piece 141 via the first connection piece 144. In one embodiment, the first current collecting piece 142 extends in the second direction Z, and intersects with the first connection piece 144. The tab 13b may be connected to a surface of the first current collecting piece 142 facing or facing away from the cap assembly 12. The first connection piece 144 is located on one side of the tab 13b in the second direction Z, so that the first connection piece 144 may not extend beyond the tab 13b in the first direction Y, which is conducive to reduce a space occupancy rate of the first connection piece 144 and increase the energy density of the secondary battery 10. The first current collecting piece 142 is overlapped with the tab 13b in the axial direction X, so that the first current collecting piece may not extend beyond the tab 13b in the first direction Y either, which is further conducive to reduce the space occupancy rate of the first current collecting piece 142, and increase the energy density of the secondary battery 10. In one embodiment, the first current collecting piece 142 includes a first connection end 142a connected to the first connection piece 144, and the first connection end 142a extends in the first direction Y. A thickness direction of the first current collecting piece 142 is the same as the axial direction X. The first current collecting piece 142 is disposed far away from the electrode assembly 13, and a sufficiently large yielding space may be reserved on opposite sides of the first current collecting piece in the axial direction X. When the first current collecting piece 142 and the tab 13b are connected by the ultrasonic welding, it is convenient for the ultrasonic device to clamp the first current collecting piece 142 from both sides of the first current collecting piece 142 in the axial direction X, thereby facilitating the ultrasonic welding operation.

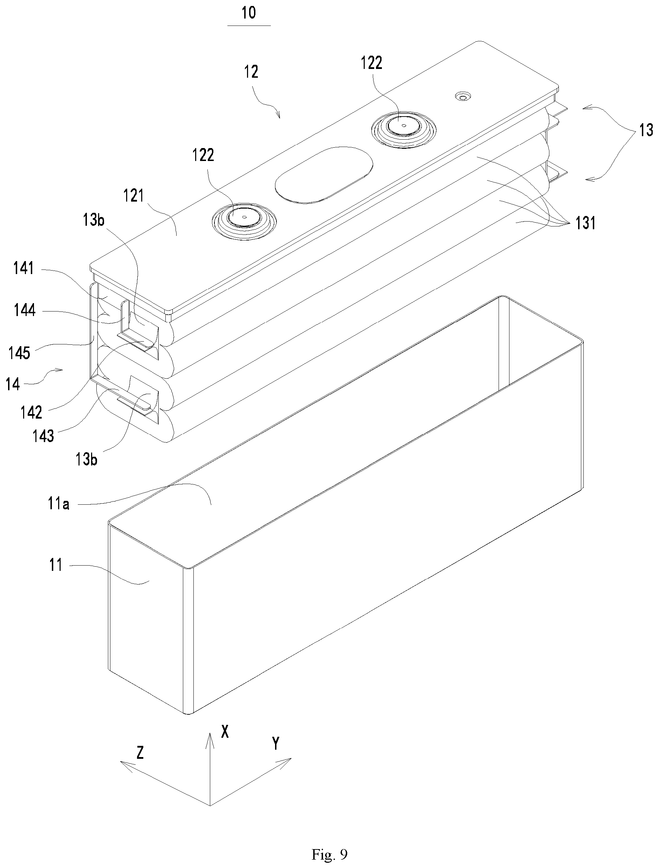

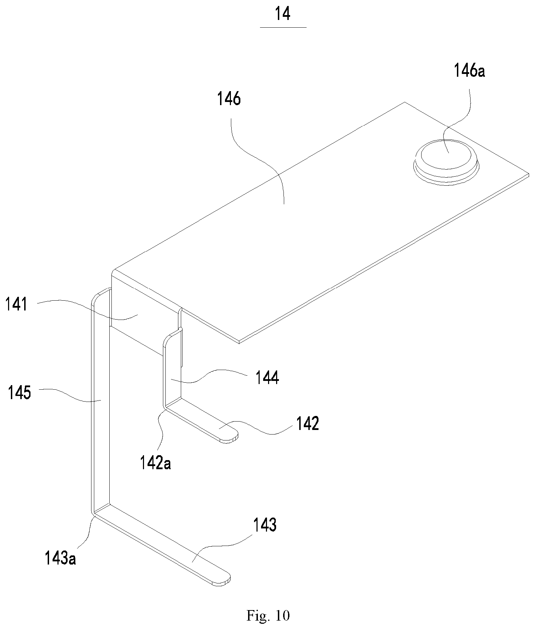

In one embodiment, referring to Figs. 9 and 10, the current collecting unit 14 further includes a first connection piece 144 and a second connection piece 145 both connected to the first piece 141. The first connection piece 144 and the second connection piece 145 are spaced apart in the second direction Z and both extend in the axial direction X. The first current collecting piece 142 is connected to the first piece 141 via the first connection piece 144. The second current collecting piece 143 is connected to the first piece 141 via the second connection piece 145. In one embodiment, the first current collecting piece 142 and the second current collecting piece 143 both extend in the second direction Z, and respectively intersect with the first connection piece 144 and the second connection piece 145. The tabs 13b may be connected to surfaces of the first current collecting piece 142 and the second current collecting piece 143 facing or facing away from the cap assembly 12. In the second direction Z, the first connection piece 144 and the second connection piece 145 are both located on one side of the tabs 13b, so that the first connection piece 144 and the second connection piece 145 may not extend beyond their respective corresponding tabs 13b in the first direction Y, which is conducive to reduce a space occupancy rate of the first connection piece 144 and the second connection piece 145, and increase the energy density of the secondary battery 10. Both the first current collecting piece 142 and the second current collecting piece 143 overlap with their respective corresponding tabs 13b in the axial direction X, so that both the first current collecting piece 142 and the second current collecting piece 143 may not extend beyond their respective corresponding tabs 13b in the first direction Y, which is further conducive to reduce the space occupancy rate of the first current collecting piece 142 and the second current collecting piece 143, and increase the energy density of the secondary battery 10. In one embodiment, the first current collecting piece 142 is disposed closer to the cap assembly 12 than the second current collecting piece 143, the tab 13b of one electrode assembly 13 is connected to a surface of the first current collecting piece 142 facing or facing away from the cap assembly 12, and the tab 13b of the other electrode assembly 13 is connected to a surface of the second current collecting piece 143 facing or facing away from the cap assembly 12.

The first current collecting piece 142 in the embodiment of the present disclosure includes a first connection end 142a connected to the first piece 141. The second current collecting piece 143 includes a second connection end 143a connected to the first piece 141. Both of the first connection end 142a and the second connection end 143a extend in the first direction Y. Thickness directions of the first current collecting piece 142 and the second current collecting piece 143 are the same as the axial direction X. In one embodiment, the first current collecting piece 142 and the second current collecting piece 143 are both formed in a rectangular shape, and their respective length directions are the same as the second direction Z.

In one embodiment, there are two electrode assemblies 13. The two electrode assemblies 13 are stacked in the axial direction X. Each electrode assembly 13 includes two electrode units 131. Each electrode unit 131 includes sub-end faces 131c and sub-tabs 131d extending from the sub-end faces 131c. Two sub-end faces 131c on the same side of the electrode units constitute the end face 13a. Two sub-tabs 131d of the same polarity are assembled to the tab 13b. The sub-tab 131d of one electrode unit 131 extends out from a region of the sub-end face 131c close to the other electrode unit 131 in the axial direction X, so that the respective sub-tabs 131d of the two electrode units 131 are close to each other and may be assembled to the tab 13b, which is fixedly connected with the first current collecting piece 142 and the second current collecting piece 143, with a relatively short extension. As such, on the one hand, the sub-tab 131d will not be redundant in length due to its own excessive long extension. When the sub-tab 131d is redundant, it is easy to cause a bending of the sub-tab 131d, thereby causing a stress concentration area and breakage of the sub-tab 131d. On the other hand, the extension of the sub-tab 131d is relatively short, which is conducive to reduce the space occupancy rate of the tab 13b constituted by the sub-tabs 131d, and increase the energy density of the secondary battery 10.

In one embodiment, the electrode unit 131 includes two wide surfaces 131a and two narrow surfaces 131b connecting the two wide surfaces 131a. The two wide surfaces 131a are opposite to each other in the axial direction X, and the wide surfaces 131a and the narrow surfaces 131b are alternately arranged. Referring to Fig. 3 or Fig. 8, each electrode assembly 13 includes two electrode units 131. The tab 13b extends from a region of the end face 13a close to two adjacent wide surfaces 131a of the two electrode units 131, so that in the axial X direction, the tab 13b is located approximately in a central region of the end face 13a. As a result, it can be ensured that the two sub-tabs 131d drawn from the two electrode units 131 have substantially the same dimension, which is conducive to keep consistency of manufacturing process of the electrode units 131 and reduce manufacturing cost.

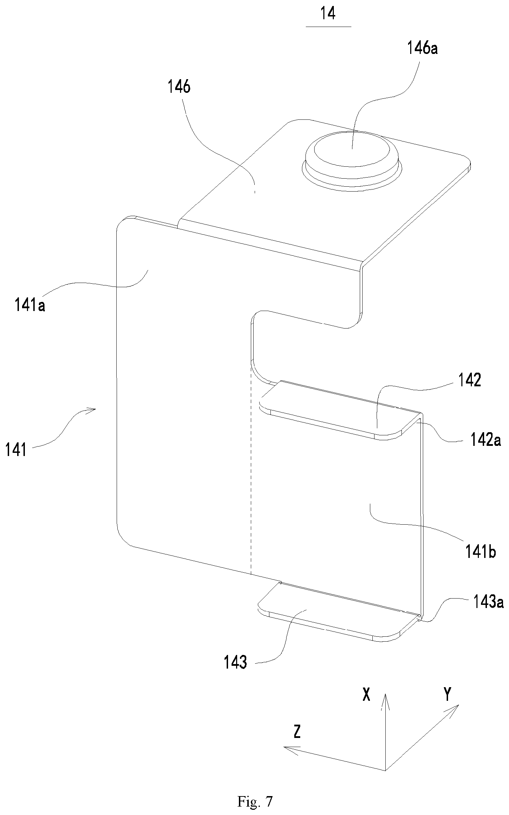

In one embodiment, referring to Fig. 7 or Fig. 10, the current collecting unit further includes a second piece 146 connected to the first piece 141. A thickness direction of the second piece 146 in the present embodiment is the same as the axial direction X. The second piece 146 includes a boss 146a disposed away from the electrode assembly 13. The second piece 146 is electrically connected to the electrode terminal 122 included in the cap assembly 12 via the boss 146a.

In one embodiment, referring to Fig. 3 or Fig. 6, there are two current collecting units 14. The cap plate 121 is provided with two electrode terminals 122, and the two current collecting units 14 are respectively connected to the two electrode terminals 122. The two current collecting units 14 are spaced apart in the first direction Y. In the first direction Y, the electrode assembly 13 is disposed between the two current collecting units 14. The main body of the electrode unit 131 included in the electrode assembly 13 is located between the two current collecting units 14, while the two tabs 13b included in the electrode assembly 13 are disposed respectively corresponding to the two current collecting units 14. One of the tabs 13b is connected to one of the current collecting units 14, and the other tab 13b is connected to the other current collecting unit 14. In the present embodiment, the two current collecting units 14 are electrically connected to the corresponding tabs 13b via their respective first current collecting pieces 142.

The battery module 20 according to the embodiment of the present disclosure includes a plurality of secondary batteries 10 arranged side by side in the same direction. Since the electrode units 131 included in each secondary battery 10 of the present embodiment are stacked in the axial direction X of the receiving space 11a of the case 11, when expanding, the electrode units 131 of the present embodiment mainly expand and deform in the axial direction X of the receiving space 11a, with a small expansion amount in an arrangement direction of the secondary battery 10. As such, an expansion resultant force accumulated in the arrangement direction of the secondary batteries 10 is relatively small. In the arrangement direction of the secondary batteries 10, the battery module 20 does not need a structural member with a higher strength to constrain or counteract the expansion force, or merely needs a structural member with a lower strength to constrain or counteract the expansion force, thereby effectively reducing an overall quality of the battery module 20, making the battery module 20 more compact, and effectively improving the energy density of the battery module 20. Meanwhile, the battery module 20 has a small expansion amount in the thickness direction of the secondary batteries 10, which can effectively improve a safety during use.

Although the present disclosure has been described with reference to preferred embodiments, various modifications can be made thereto without departing from the scope of the present disclosure. Especially, as long as there is no structural conflict, technical features mentioned in various embodiments can be combined in any manner. The present disclosure is not limited to the specific embodiments disclosed herein, but includes all technical solutions falling within the scope of the claims.

## Claims

1. A secondary battery (10), comprises:
a case (11), comprising a receiving space (11a) with an opening;
a cap assembly (12), connected to the case (11) in a sealed manner to close the opening;
an electrode assembly (13) disposed in the receiving space (11a), wherein the electrode assembly (13) comprises two end faces (13a) opposite to each other in a first direction (Y) perpendicular to an axial direction (X) of the receiving space (11a), and tabs (13b) extending from the end faces (13a), wherein the electrode assembly (13) comprises two or more electrode units (131) stacked in the axial direction (X); and
a current collecting unit (14), comprising a first piece (141) and a first current collecting piece (142) connected to the first piece (141), wherein the first piece (141) extends in the axial direction (X), the tab (13b) extends in the first direction (Y) and is connected to the first current collecting piece (142), and a portion of the tab (13b) connected to the first current collecting piece (142) and the first current collecting piece (142) are stacked in the axial direction (X).

2. The secondary battery (10) according to claim 1, **characterized in that**, the first current collecting piece (142) comprises a first connection end (142a) connected to the first piece (141), the first connection end (142a) extends in a second direction (Z) perpendicular to both the axial direction (X) and the first direction (Y), and a thickness direction of the first current collecting piece (142) is the same as the axial direction (X).

3. The secondary battery (10) according to claim 1, **characterized in that**, the first current collecting piece (142) is located on a side of the first piece (141) close to the case (11), and the tab (13b) is connected to a surface of the first current collecting piece (142) facing or facing away from the cap assembly (12).

4. The secondary battery (10) according to claim 1, **characterized in that**, the current collecting unit (14) further comprises a first connection piece (144) connected to the first piece (141), the first connection piece (144) extends in the axial direction (X), a thickness direction of the first connection piece (144) is parallel to a second direction (Z) perpendicular to both the axial direction (X) and the first direction (Y), and the first current collecting piece (142) is connected to the first piece (141) via the first connection piece (144).

5. The secondary battery (10) according to claim 4, **characterized in that**, the first current collecting piece (142) comprises a first connection end (142a) connected to the first connection piece (144), the first connection end (142a) extends in the first direction (Y), and a thickness direction of the first current collecting piece (142) is the same as the axial direction (X).

6. The secondary battery (10) according to claim 1, **characterized in that**, the current collecting unit (14) further comprises a second current collecting piece (143) connected to the first piece (141), and the first current collecting piece (142) and the second current collecting piece (143) are both located on a side of the first piece (141) close to the case (11); the secondary battery (10) comprises two electrode assemblies (13) stacked in the axial direction (X), wherein the tab (13b) of one electrode assembly (13) is electrically connected to the first current collecting piece (142), the tab (13b) of the other electrode assembly (13) is electrically connected to the second current collecting piece (143), and a portion of the tab (13b) connected to the second current collecting piece (143) and the second current collecting piece (143) are stacked in the axial direction (X).

7. The secondary battery (10) according to claim 6, **characterized in that**, the first piece (141) comprises a main body portion (141a) extending in the axial direction (X) and an extension portion (141b) connected to the main body portion (141a), the extension portion (141b) extends beyond the main body portion (141a) in a second direction (Z) perpendicular to both the axial direction (X) and the first direction (Y), and the first current collecting piece (142) and the second current collecting piece (143) are respectively connected to two ends of the extension portion (141b) in the axial direction (X).

8. The secondary battery (10) according to claim 7, **characterized in that**, the first current collecting piece (142) is closer to the cap assembly (12) than the second current collecting piece (143), and the tab (13b) of one electrode assembly (13) is connected to a surface of the first current collecting piece (142) facing the cap assembly (12), while the tab (13b) of the other electrode assembly (13) is connected to a surface of the second current collecting piece (143) facing away from the cap assembly (12).

9. The secondary battery (10) according to claim 6, **characterized in that**, the first current collecting piece (142) and the second current collecting piece (143) are at least partially overlapped in the axial direction (X).

10. The secondary battery (10) according to claim 6, **characterized in that**, the current collecting unit (14) further comprises a first connection piece (144) and a second connection piece (145) connected to the first piece (141), the first connection piece (144) and the second connection piece (145) are spaced apart in a second direction (Z) perpendicular to both the axial direction (X) and the first direction (Y), and both extend in the axial direction (X), the first current collecting piece (142) is connected to the first piece (141) via the first connection piece (144), and the second current collecting piece (143) is connected to the first piece (141) via the second connection piece (145).

11. The secondary battery (10) according to claim 10, **characterized in that**:
the first current collecting piece (142) is closer to the cap assembly (12) than the second current collecting piece (143), the tab (13b) of one electrode assembly (13) is connected to a surface of the first current collecting piece (142) facing or facing away from the cap assembly (12), and the tab (13b) of the other electrode assembly (13) is connected to a surface of the second current collecting piece (143) facing or facing away from the cap assembly (12); or
the first current collecting piece (142) comprises a first connection end (142a) connected to the first piece (141), the second current collecting piece (143) comprises a second connection end (143a) connected to the first piece (141), the first connection end (142a) and the second connection end (143a) both extend in the first direction (Y), and thickness directions of the first current collecting piece (142) and the second current collecting piece (143) are both the same as the axial direction (X).

12. The secondary battery (10) according to claim 1, **characterized in that**, the secondary battery (10) comprises two electrode assemblies (13) stacked in the axial direction (X), and each electrode assembly (13) comprises two electrode units (131), each of which comprises sub-end faces (131c) and sub-tabs (131d) extending from the sub-end faces (131c), two sub-end faces (131c) on the same side of the electrode units (131) constitute the end face (13a), and two sub-tabs (131d) of the same polarity are assembled to constitute the tab (13b), wherein the sub-tab (131d) of one of the two electrode units (131) extends from a region of the sub-end face (131c) close to the other electrode unit (131) in the axial direction (X).

13. The secondary battery (10) according to claim 12, **characterized in that**, the electrode unit (131) comprises two wide surfaces (131a) and two narrow surfaces (131b) connecting the two wide surfaces (131a), the two wide surfaces (131a) are opposite to each other in the axial direction (X), and the wide surfaces (131a) and the narrow surfaces (131b) are alternately arranged, wherein the tab (13b) extends from a region of the end face (13a) close to two adjacent wide surfaces (131a) of the two electrode units (131).

14. The secondary battery (10) according to claim 1, **characterized in that**, the secondary battery comprises two current collecting units (14), the electrode assembly (13) is disposed between the two current collecting units (14) in the first direction (Y), and each of the two current collecting units (14) is electrically connected to the corresponding tab (13b) via the respective first current collecting piece (142).

15. A battery module (20), comprises two or more secondary batteries (10) according to any of claims 1 to 14, **characterized in that**, the two or more secondary batteries (10) are arranged side by side.

## Patentansprüche

1. Sekundärbatterie (10), umfassend:
ein Gehäuse (11), das einen Aufnahmeraum (11a) mit einer Öffnung aufweist;
eine Deckelanordnung (12), die mit dem Gehäuse (11) dicht verbunden ist, um die Öffnung zu verschließen;
eine Elektrodenanordnung (13), die in dem Aufnahmeraum (11a) angeordnet ist, wobei die Elektrodenanordnung (13) zwei Endflächen (13a), die einander in einer ersten Richtung (Y) gegenüberliegen, welche senkrecht zu einer axialen Richtung (X) des Aufnahmeraums (11a) ist, sowie Laschen (13b), die sich von den Endflächen (13a) erstrecken, aufweist, wobei die Elektrodenanordnung (13) zwei oder mehr Elektrodeneinheiten (131) umfasst, die in der axialen Richtung (X) gestapelt sind; und
eine Stromsammeleinheit (14), die ein erstes Stück (141) und ein mit dem ersten Stück (141) verbundenes erstes Stromsammelstück (142) umfasst, wobei sich das erste Stück (141) in der axialen Richtung (X) erstreckt, sich die Lasche (13b) in der ersten Richtung (Y) erstreckt und
mit dem ersten Stromsammelstück (142) verbunden ist, und ein mit dem ersten Stromsammelstück (142) verbundener Abschnitt der Lasche (13b) und das erste Stromsammelstück (142) in der axialen Richtung (X) gestapelt sind.

2. Sekundärbatterie (10) nach Anspruch 1, **dadurch gekennzeichnet, dass** das erste Stromsammelstück (142) ein mit dem ersten Stück (141) verbundenes erstes Verbindungsende (142a) umfasst, wobei sich das erste Verbindungsende (142a) in einer zweiten Richtung (Z) erstreckt, die sowohl zu der axialen Richtung (X) als auch zu der ersten Richtung (Y) senkrecht ist, und eine Dickenrichtung des ersten Stromsammelstücks (142) mit der axialen Richtung (X) übereinstimmt.

3. Sekundärbatterie (10) nach Anspruch 1, **dadurch gekennzeichnet, dass** das erste Stromsammelstück (142) auf einer dem Gehäuse (11) nahen Seite des ersten Stücks (141) angeordnet ist, und die Lasche (13b) mit einer der Deckelanordnung (12) zugewandten oder von der Deckelanordnung (12) abgewandten Oberfläche des ersten Stromsammelstücks (142) verbunden ist.

4. Sekundärbatterie (10) nach Anspruch 1, **dadurch gekennzeichnet, dass** die Stromsammeleinheit (14) ferner ein erstes Verbindungsstück (144) umfasst, das mit dem ersten Stück (141) verbunden ist, wobei sich das erste Verbindungsstück (144) in der axialen Richtung (X) erstreckt, eine Dickenrichtung des ersten Verbindungsstücks (144) parallel zu einer zweiten Richtung (Z) ist, die sowohl zu der axialen Richtung (X) als auch zu der ersten Richtung (Y) senkrecht ist, und das erste Stromsammelstück (142) über das erste Verbindungsstück (144) mit dem ersten Stück (141) verbunden ist.

5. Sekundärbatterie (10) nach Anspruch 4, **dadurch gekennzeichnet, dass** das erste Stromsammelstück (142) ein mit dem ersten Verbindungsstück (144) verbundenes erstes Verbindungsende (142a) umfasst, wobei sich das erste Verbindungsende (142a) in der ersten Richtung (Y) erstreckt, und eine Dickenrichtung des ersten Stromsammelstücks (142) mit der axialen Richtung (X) übereinstimmt.

6. Sekundärbatterie (10) nach Anspruch 1, **dadurch gekennzeichnet, dass** die Stromsammeleinheit (14) ferner ein zweites Stromsammelstück (143) umfasst, das mit dem ersten Stück (141) verbunden ist, und das erste Stromsammelstück (142) und das zweite Stromsammelstück (143) beide auf einer dem Gehäuse (11) nahen Seite des ersten Stücks (141) angeordnet sind;
wobei die Sekundärbatterie (10) zwei in der axialen Richtung (X) gestapelte Elektrodenanordnungen (13) umfasst, wobei die Lasche (13b) einer Elektrodenanordnung (13) elektrisch mit dem ersten Stromsammelstück (142) verbunden ist, die Lasche (13b) der anderen Elektrodenanordnung (13) elektrisch mit dem zweiten Stromsammelstück (143) verbunden ist, und ein mit dem zweiten Stromsammelstück (143) verbundener Abschnitt der Lasche (13b) und das zweite Stromsammelstück (143) in der axialen Richtung (X) gestapelt sind.

7. Sekundärbatterie (10) nach Anspruch 6, **dadurch gekennzeichnet, dass** das erste Stück (141) einen sich in der axialen Richtung (X) erstreckenden Hauptkörperabschnitt (141a) und einen mit dem Hauptkörperabschnitt (141a) verbundenen Verlängerungsabschnitt (141b) umfasst, wobei sich der Verlängerungsabschnitt (141b) in einer zweiten Richtung (Z), die sowohl zu der axialen Richtung (X) als auch zu der ersten Richtung (Y) senkrecht ist, über den Hauptkörperabschnitt (141a) hinaus erstreckt, und das erste Stromsammelstück (142) und das zweite Stromsammelstück (143) jeweils mit zwei Enden des Verlängerungsabschnitts (141b) in der axialen Richtung (X) verbunden sind.

8. Sekundärbatterie (10) nach Anspruch 7, **dadurch gekennzeichnet, dass** das erste Stromsammelstück (142) der Deckelanordnung (12) näher liegt als das zweite Stromsammelstück (143), und die Lasche (13b) einer Elektrodenanordnung (13) mit einer der Deckelanordnung (12) zugewandten Oberfläche des ersten Stromsammelstücks (142) verbunden ist, während die Lasche (13b) der anderen Elektrodenanordnung (13) mit einer von der Deckelanordnung (12) abgewandten Oberfläche des zweiten Stromsammelstücks (143) verbunden ist.

9. Sekundärbatterie (10) nach Anspruch 6, **dadurch gekennzeichnet, dass** das erste Stromsammelstück (142) und das zweite Stromsammelstück (143) in der axialen Richtung (X) zumindest teilweise überlappen.

10. Sekundärbatterie (10) nach Anspruch 6, **dadurch gekennzeichnet, dass** die Stromsammeleinheit (14) ferner ein erstes Verbindungsstück (144) und ein zweites Verbindungsstück (145) umfasst, die mit dem ersten Stück (141) verbunden sind, wobei das erste Verbindungsstück (144) und das zweite Verbindungsstück (145) in einer zweiten Richtung (Z), die sowohl zu der axialen Richtung (X) als auch zu der ersten Richtung (Y) senkrecht ist, voneinander beabstandet sind und sich beide in der axialen Richtung (X) erstrecken, wobei das erste Stromsammelstück (142) über das erste Verbindungsstück (144) mit dem ersten Stück (141) verbunden ist, und das zweite Stromsammelstück (143) über das zweite Verbindungsstück (145) mit dem ersten Stück (141) verbunden ist.

11. Sekundärbatterie (10) nach Anspruch 10, **dadurch gekennzeichnet, dass**:
das erste Stromsammelstück (142) der Deckelanordnung (12) näher liegt als das zweite Stromsammelstück (143), die Lasche (13b) einer Elektrodenanordnung (13) mit einer der Deckelanordnung (12) zugewandten oder von der Deckelanordnung (12) abgewandten Oberfläche des ersten Stromsammelstücks (142) verbunden ist, und die Lasche (13b) der anderen Elektrodenanordnung (13) mit einer der Deckelanordnung (12) zugewandten oder
von der Deckelanordnung (12) abgewandten Oberfläche des zweiten Stromsammelstücks (143) verbunden ist; oder
das erste Stromsammelstück (142) ein mit dem ersten Stück (141) verbundenes erstes Verbindungsende (142a) umfasst, das zweite Stromsammelstück (143) ein mit dem ersten Stück (141) verbundenes zweites Verbindungsende (143a) umfasst, wobei sich sowohl das erste Verbindungsende (142a) als auch das zweite Verbindungsende (143a) in der ersten Richtung (Y) erstrecken, und Dickenrichtungen des ersten Stromsammelstücks (142) und des zweiten Stromsammelstücks (143) beide mit der axialen Richtung (X) übereinstimmen.

12. Sekundärbatterie (10) nach Anspruch 1, **dadurch gekennzeichnet, dass** die Sekundärbatterie (10) zwei in der axialen Richtung (X) gestapelte Elektrodenanordnungen (13) umfasst, und jede Elektrodenanordnung (13) zwei Elektrodeneinheiten (131) umfasst, wobei jede Elektrodeneinheit (131) Unterendflächen (131c) und sich von den Unterendflächen (131c) erstreckende Unterlaschen (131d) umfasst, zwei auf derselben Seite der Elektrodeneinheiten (131) befindliche Unterendflächen (131c) die Endfläche (13a) bilden, und zwei Unterlaschen (131d) derselben Polarität zusammengesetzt sind, um die Lasche (13b) zu bilden, wobei sich die Unterlasche (131d) einer der zwei Elektrodeneinheiten (131) von einem Bereich der Unterendfläche (131c) erstreckt, der in der axialen Richtung (X) nahe bei der anderen Elektrodeneinheit (131) liegt.

13. Sekundärbatterie (10) nach Anspruch 12, **dadurch gekennzeichnet, dass** die Elektrodeneinheit (131) zwei breite Flächen (131a) und zwei schmale Flächen (131b), welche die zwei breiten Flächen (131a) verbinden, umfasst, wobei die zwei breiten Flächen (131a) einander in der axialen Richtung (X) gegenüberliegen, und die breiten Flächen (131a) und die schmalen Flächen (131b) abwechselnd angeordnet sind, wobei sich die Lasche (13b) von einem Bereich der Endfläche (13a) erstreckt, der nahe bei zwei benachbarten breiten Flächen (131a) der zwei Elektrodeneinheiten (131) liegt.

14. Sekundärbatterie (10) nach Anspruch 1, **dadurch gekennzeichnet, dass** die Sekundärbatterie zwei Stromsammeleinheiten (14) umfasst, die Elektrodenanordnung (13) in der ersten Richtung (Y) zwischen den zwei Stromsammeleinheiten (14) angeordnet ist, und jede der zwei Stromsammeleinheiten (14) über das jeweilige erste Stromsammelstück (142) elektrisch mit der entsprechenden Lasche (13b) verbunden ist.

15. Batteriemodul (20), umfassend zwei oder mehr Sekundärbatterien (10) nach einem der Ansprüche 1 bis 14, **dadurch gekennzeichnet, dass** die zwei oder mehr Sekundärbatterien (10) nebeneinander angeordnet sind.

## Revendications

1. Batterie secondaire (10), comprenant :
un boîtier (11), comprenant un espace de réception (11a) ayant une ouverture ;
un ensemble de couvercle (12) connecté de manière étanche au boîtier (11) pour fermer l'ouverture ;
un ensemble d'électrode (13) disposé dans l'espace de réception (11a), l'ensemble d'électrode (13) comprenant deux faces d'extrémité (13a) à l'opposée l'une de l'autre dans une première direction (Y) perpendiculaire à une direction axiale (X) de l'espace de réception (11a), et des pattes (13b) s'étendant à partir des faces d'extrémité (13a), l'ensemble d'électrode (13) comprenant deux ou plusieurs unités d'électrode (131) superposées dans la direction axiale (X) ; et
une unité collectrice de courant (14), comprenant une première pièce (141) et une première pièce collectrice de courant (142) connectée à la première pièce (141), la première pièce (141) s'étendent dans la direction axiale (X), la patte (13b) s'étendent dans la première direction (Y) et étant connectée à la première pièce collectrice de courant (142), et une partie de la patte (13b) connectée à la première pièce collectrice de courant (142) et la première pièce collectrice de courant (142) étant superposées dans la direction axiale (X).

2. Batterie secondaire (10) selon la revendication 1, **caractérisée en ce que**, la première pièce collectrice de courant (142) comprend une première extrémité de connexion (142a) connectée à la première pièce (141), la première extrémité de connexion (142a) s'étend dans une deuxième direction (Z) perpendiculaire à la fois à la direction axiale (X) et à la première direction (Y), et une direction d'épaisseur de la première pièce collectrice de courant (142) est la même que la direction axiale (X).

3. Batterie secondaire (10) selon la revendication 1, **caractérisée en ce que**, la première pièce collectrice de courant (142) est située sur un côté de la première pièce (141) proche du boîtier (11), et la patte (13b) est connectée à une surface de la première pièce collectrice de courant (142) faisant face ou s'éloignant de l'ensemble de couvercle (12).

4. Batterie secondaire (10) selon la revendication 1, **caractérisée en ce que**, l'unité collectrice de courant (14) comprend en outre une première pièce de connexion (144) connectée à la première pièce (141), la première pièce de connexion (144) s'étend dans la direction axiale (X), une direction d'épaisseur de la première pièce de connexion (144) est parallèle à une deuxième direction (Z) perpendiculaire à la fois à la direction axiale (X) et à la première direction (Y), et la première pièce collectrice de courant (142) est connectée à la première pièce (141) par l'intermédiaire de la première pièce de connexion (144).

5. Batterie secondaire (10) selon la revendication 4, **caractérisée en ce que**, la première pièce collectrice de courant (142) comprend une première extrémité de connexion (142a) connectée à la première pièce de connexion (144), la première extrémité de connexion (142a) s'étend dans la première direction (Y) et une direction d'épaisseur de la première pièce collectrice de courant (142) est la même que la direction axiale (X).

6. Batterie secondaire (10) selon la revendication 1, **caractérisée en ce que** l'unité collectrice de courant (14) comprend en outre une deuxième pièce collectrice de courant (143) connectée à la première pièce (141), et la première pièce collectrice de courant (142) et la deuxième pièce collectrice de courant (143) sont toutes deux situées sur un côté de la première pièce (141) proche du boîtier (11); la batterie secondaire (10) comprend deux ensembles d'électrode (13) superposés dans la direction axiale (X), dans laquelle la patte (13b) d'un ensemble d'électrode (13) est connectée électriquement à la première pièce collectrice de courant (142), la patte (13b) de l'autre ensemble d'électrode (13) est connectée électriquement à la deuxième pièce collectrice de courant (143), et une partie de la patte (13b) connectée à la deuxième pièce collectrice de courant (143) ainsi que la deuxième pièce collectrice de courant (143) sont superposées dans la direction axiale (X).

7. Batterie secondaire (10) selon la revendication 6, **caractérisée en ce que**, la première pièce (141) comprend une partie de corps principal (141a) s'étendant dans la direction axiale (X) et une partie d'extension (141b) connectée à la partie de corps principal (141a), la partie d'extension (141b) s'étend hors de la partie de corps principal (141a) dans une deuxième direction (Z) perpendiculaire à la fois à la direction axiale (X) et à la première direction (Y), et la première pièce collectrice de courant (142) et la deuxième pièce collectrice de courant (143) sont connectées respectivement à deux extrémités de la partie d'extension (141b) dans la direction axiale (X).

8. Batterie secondaire (10) selon la revendication 7, **caractérisée en ce que** la première pièce collectrice de courant (142) est plus proche de l'ensemble de couvercle (12) que la deuxième pièce collectrice de courant (143), et la patte (13b) d'un ensemble d'électrode (13) est connectée à une surface de la première pièce collectrice de courant (142) faisant face à l'ensemble de couvercle (12), tandis que la patte (13b) de l'autre ensemble d'électrode (13) est connectée à une surface de la deuxième pièce collectrice de courant (143) s'éloignant de l'ensemble de couvercle (12).

9. Batterie secondaire (10) selon la revendication 6, **caractérisée en ce que** la première pièce collectrice de courant (142) et la deuxième pièce collectrice de courant (143) se chevauchent au moins partiellement dans la direction axiale (X).

10. Batterie secondaire (10) selon la revendication 6, **caractérisée en ce que**, l'unité collectrice de courant (14) comprend en outre une première pièce de connexion (144) et une deuxième pièce de connexion (145) connectée à la première pièce (141), la première pièce de connexion (144) et la deuxième pièce de connexion (145) étant espacées dans une deuxième direction (Z) perpendiculaire à la fois à la direction axiale (X) et à la première direction (Y), et s'étendant toutes deux dans la direction axiale (X), la première pièce collectrice de courant (142) étant connectée à la première pièce (141) par l'intermédiaire de la première pièce de connexion (144), et la deuxième pièce collectrice de courant (143) étant connectée à la première pièce (141) par l'intermédiaire de la deuxième pièce de connexion (145).

11. Batterie secondaire (10) selon la revendication 10, **caractérisée en ce que** :
la première pièce collectrice de courant (142) est plus proche de l'ensemble de couvercle (12) que la deuxième pièce collectrice de courant (143), la patte (13b) d'un ensemble d'électrode (13) est connectée à une surface de la première pièce collectrice de courant (142) faisant face ou s'éloignant de l'ensemble de couvercle (12), et la patte (13b) de l'autre ensemble d'électrode (13) est connectée à une surface de la deuxième pièce collectrice de courant (143) faisant face ou s'éloignant de l'ensemble de couvercle (12) ; ou
la première pièce collectrice de courant (142) comprend une première extrémité de connexion (142a) connectée à la première pièce (141), la deuxième pièce collectrice de courant (143) comprend une deuxième extrémité de connexion (143a) connectée à la première pièce (141), la première extrémité de connexion (142a) et la deuxième extrémité de connexion (143a) s'étendent toutes deux dans la première direction (Y), et des directions d'épaisseur de la première pièce collectrice de courant (142) et de la deuxième pièce collectrice de courant (143) sont toutes deux les mêmes que la direction axiale (X).

12. Batterie secondaire (10) selon la revendication 1, **caractérisée en ce que**, la batterie secondaire (10) comprend deux ensembles d'électrodes (13) superposés dans la direction axiale (X), et chaque ensemble d'électrode (13) comprend deux unités d'électrode (131) dont chacune comprend des sous-face d'extrémité (131c) et des sous-pattes (131d) s'étendant à partir des sous-faces d'extrémité (131c), deux sous-faces d'extrémité (131c) sur le même côté des unités d'électrode (131) constituent la face d'extrémité (13a), et deux sous-pattes (131d) de la même polarité sont assemblées pour constituer la patte (13b), dans laquelle la sous-patte (131d) de l'une des deux unités d'électrode (131) s'étend à partir d'une région de la sous-face d'extrémité (131c) proche de l'autre unité d'électrode (131) dans la direction axiale (X).

13. Batterie secondaire (10) selon la revendication 12, **caractérisée en ce que** l'unité d'électrode (131) comprend deux surfaces larges (131a) et deux surfaces étroites (131b) connectant les deux surfaces larges (131a), les deux surfaces larges (131a) sont à l'opposée l'une de l'autre dans la direction axiale (X), et les surfaces larges (131a) et les surfaces étroites (131b) sont disposées de manière alternative, la patte (13b) s'étendant à partir d'une région de la face d'extrémité (13a) proche de deux surfaces larges (131a) adjacentes des deux unités d'électrode (131).

14. Batterie secondaire (10) selon la revendication 1, **caractérisée en ce que** la batterie secondaire comprend deux unités collectrices de courant (14), l'ensemble d'électrode (13) est disposé entre les deux unités collectrices de courant (14) dans la première direction (Y), et chacune des deux unités collectrices de courant (14) est connectée électriquement à la patte (13b) correspondante par l'intermédiaire de la première pièce collectrice de courant (142) respective.

15. Module de batterie (20) comprenant deux ou plusieurs batteries secondaires (10) selon l'une quelconque des revendications 1 à 14, **caractérisé en ce que**, les deux ou plusieurs batteries secondaires (10) sont disposées côte à côte.
